(19) Europäisches Patentamt
European Patent Office
Office européen des brevets

(11) EP 2 532 697 B1

# (12) EUROPEAN PATENT SPECIFICATION

(45) Date of publication and mention of the grant of the patent:
**26.03.2014 Bulletin 2014/13**

(21) Application number: **10845221.0**

(22) Date of filing: **05.02.2010**

(51) Int Cl.:
***C08G 64/14*** *(2006.01)* ***C08J 5/18*** *(2006.01)*

(86) International application number:
**PCT/JP2010/052111**

(87) International publication number:
**WO 2011/096089 (11.08.2011 Gazette 2011/32)**

## (54) POLYCARBONATE RESIN AND METHOD FOR PRODUCING SAME

POLYCARBONATHARZ UND VERFAHREN ZU SEINER HERSTELLUNG

RÉSINE POLYCARBONATE ET PROCÉDÉ POUR PRODUIRE CELLE-CI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.12.2012 Bulletin 2012/50**

(73) Proprietor: **Teijin Limited**
**Osaka-shi, Osaka 541-0054 (JP)**

(72) Inventors:
- **KINOSHITA Masami**
**Tokyo 100-0013 (JP)**
- **SAITO Mizuho**
**Tokyo 100-0013 (JP)**
- **KONDO Fumitaka**
**Tokyo 100-0013 (JP)**

(74) Representative: **Albrecht, Thomas et al**
**Kraus & Weisert**
**Patent- und Rechtsanwälte**
**Thomas-Wimmer-Ring 15**
**80539 München (DE)**

(56) References cited:
**EP-A1- 2 123 692**
**WO-A1-2008/108492**
**JP-A- 2009 215 435**
**JP-A- 2010 043 225**
**US-A- 4 506 066**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 532 697 B1

## Description

TECHNICAL FIELD

The present invention relates to a process for the production of a polycarbonate resin. More specifically, it relates to a process for the production of a polycarbonate resin containing a recurring unit derived from sugar which is biogenic matter and having excellent moisture absorption resistance, heat resistance, heat stability and moldability.

BACKGROUND ART

Polycarbonate resins are polymers in which aromatic or aliphatic dioxy compounds are connected to each other by a carbonate ester. Out of these, a polycarbonate resin (may be referred to as "PC-A" hereinafter) obtained from 2,2-bis(4-hydroxyphenyl)propane (commonly known as "bisphenol A") is used in many fields because it has excellent transparency, heat resistance and impact resistance.

Polycarbonate resins are generally produced by using raw materials obtained from oil resources. Because of the concern about the depletion of oil resources, it is desired to produce a polycarbonate resin by using raw materials obtained from biogenic matter such as plants. A polycarbonate resin obtained from an ether diol which can be produced from sugar is now under study.

For example, an ether diol represented by the following formula (5) is easily produced from biogenic matter such as sugar or starch.

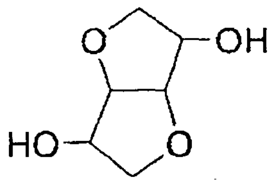

( 5 )

It is known that this ether diol has three stereoisomers.

In concrete terms, they are 1,4:3,6-dianhydro-D-sorbitol (to be referred to as "isosorbide" hereinafter) represented by the following formula (9), 1,4:3,6-dianhydro-D-mannitol (to be referred to as "isomannide" hereinafter) represented by the following formula (10), and 1,4:3,6-dianhydro-L-iditol (to be referred to as "isoidide" hereinafter) represented by the following formula (11).

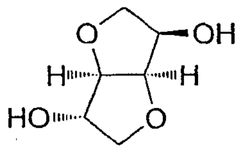

(9)

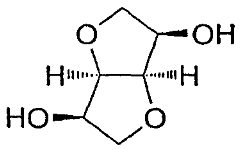

(10)

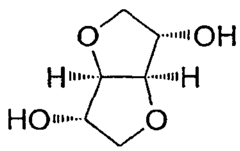

(11)

Isosorbide, isomannide and isoidide are obtained from D-glucose, D-mannose and L-idose, respectively. For example, isosorbide can be obtained by hydrogenating D-glucose and then dehydrating it by using an acid catalyst.

The incorporation of especially isosorbide out of the ether diols represented by the formula (5) into a polycarbonate resin has been studied (Patent Documents 1 to 5).

However, an isosorbide-containing polycarbonate resin contains a large number of oxygen atoms and has higher polarity than a polycarbonate resin obtained from a diol having no ether moiety, such as PC-A. Therefore, the

isosorbide-containing polycarbonate resin has higher hygroscopic nature than PC-A, whereby it readily causes the deterioration of the dimensional stability of a molded article by moisture absorption and the degradation of heat resistance at the time of wet heating. Further, as the isosorbide-containing polycarbonate resin has low surface energy, a molded article is easily stained and susceptible to abrasion. This surface energy can be evaluated by contact angle with water.

The isosorbide-containing polycarbonate resin has room for the further improvement of moisture absorption resistance, heat resistance, heat stability and moldability as described above. The isosorbide-containing polycarbonate resin also has room for the improvement of a defect caused by low surface energy.

(Patent Document 1) JP-A 56-055425
(Patent Document 2) JP-A 56-110723
(Patent Document 3) JP-A 2003-292603
(Patent Document 4) WO2004/111106
(Patent Document 5) JP-A 2006-232897

DISCLOSURE OF THE INVENTION

It is therefore an object of the present invention to provide a polycarbonate resin which has a high content of biogenic matter, excellent moisture absorption resistance, heat resistance, heat stability and moldability, and high surface energy.

The inventors of the present invention found that, in a polycarbonate resin containing a recurring unit represented by the following formula (1) in the main chain, the amount of a polymer terminal hydroxyl group (OH value) greatly contributes to the water absorption coefficient of a polymer and that a polycarbonate resin having excellent moisture absorption resistance, heat resistance, heat stability and moldability, and high surface energy is obtained by setting the OH value in particular to 2.5 x $10^3$ or less. The present invention was accomplished based on this finding.

The present invention is a process for producing a polycarbonate resin which contains 30 to 100 mol% of a unit represented by the following formula (1) in all the main chains and has

(i) a biogenic matter content measured in accordance with ASTM D6866 05 of 25 to 100 %,
(ii) a specific viscosity at 20°C of a solution prepared by dissolving 0.7 g of the resin in 100 ml of methylene chloride of 0.2 to 0.6 and
(iii) an OH value of 2.5 x $10^3$ or less,

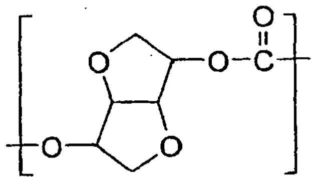
(1)

by reacting a dihydroxy component consisting of 30 to 100 mol% of an ether diol (component A) represented by the following formula (5) and 0 to 70 mol% of a diol or a diphenol (component B) except for the ether diol (component A) with a diester carbonate component (component C) by heating at normal pressure and then melt polycondensing the reaction product under reduced pressure by heating at 180 to 280°C in the presence of a polymerization catalyst, wherein
(iv) the weight ratio of the component C to the dihydroxy component (component C/(component A + component B)) is set to 1.05 to 0.97 at the start of polymerization; and
(v) the component C is further added to ensure that the weight ratio of the component C to the dihydroxy component (component C/(component A + component B)) during polymerization becomes 1.08 to 1.00.

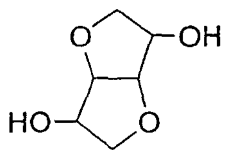
(5)

BEST MODE FOR CARRYING OUT THE INVENTION

The present invention will be described in detail hereinunder.

<polycarbonate resin>

(main chain)

The polycarbonate resin prepared according to the present invention contains a unit represented by the following formula (1) in the main chain. The content of the unit represented by the following formula (1) in the main chain is 30 to 100 mol%, preferably 50 to 95 mol%, more preferably 55 to 90 mol%.

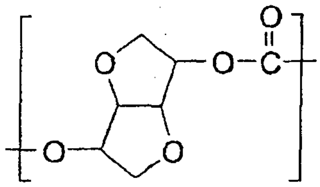

(1)

The unit represented by the formula (1) is preferably a unit derived from isosorbide, isomannide or isoidide. It is particularly preferably a unit derived from isosorbide (1,4:3,6-dianhydro-D-sorbitol).

The polycarbonate resin prepared according to the present invention contains 0 to 70 mol%, preferably 5 to 50 mol%, more preferably 10 to 45 mol% of a unit represented by the following formula (12) derived from a diphenol or a unit represented by the following formula (16) derived from a diol besides the unit represented by the above formula (1) in the main chain. (formula (12))

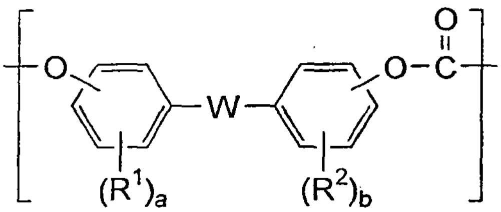

(12)

In the formula (12), $R^1$ and $R^2$ are each independently at least one group selected from the group consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and when there are $R^1$'s and $R^2$'s, they may be the same or different.

$R^1$ and $R^2$ are preferably each independently at least one group selected from the group consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, aryl group having 6 to 10 carbon atoms, aryloxy group having 6 to 10 carbon atoms, aralkyl group having 7 to 20 carbon atoms and aralkyloxy group having 7 to 20 carbon atoms, and when there are $R^1$'s and $R^2$'s, they may be the same or different.

a and b are each independently an integer of 1 to 4.

W is at least one bonding group selected from the group consisting of a single bond and bonding groups represented by the following formulas (13).

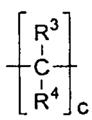 , 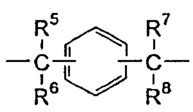 , 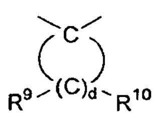 , —O— , —S— , 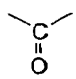 , 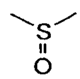

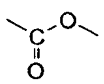 , 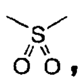 , 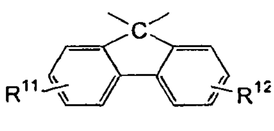 or 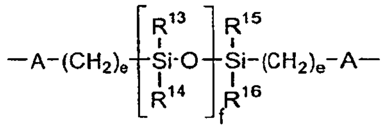

(13)

In the above formulas (13), $R^3$, $R^4$, $R^5$, $R^6$, $R^7$, $R^8$, $R^9$ and $R^{10}$ are each independently at least one group

selected from the group consisting of a hydrogen atom, alkyl group having 1 to 10 carbon atoms, aryl group having 6 to 10 carbon atoms and aralkyl group having 7 to 20 carbon atoms. When there are $R^3$'s, $R^4$'s, $R^5$'s, $R^6$'s, $R^7$'s, $R^8$'s, $R^9$'s and $R^{10}$'s, they may the same or different.

$R^{11}$ and $R^{12}$ are each independently at least one group selected from the group consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group.

$R^{13}$, $R^{14}$, $R^{15}$ and $R^{16}$ are each independently at least one group selected from the group consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms. When there are $R^{13}$'s, $R^{14}$'s, $R^{15}$'s and $R^{16}$'s, they may be the same or different.

c is an integer of 1 to 10, d is an integer of 4 to 7, e is an integer of 1 to 3, and f is an integer of 1 to 100.

W is particularly preferably at least one bonding group selected from the group consisting of a single bond and bonding groups represented by the following formulas (14).

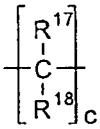 , 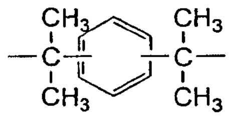 , 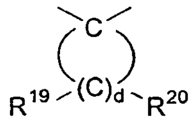 , —O— , —S—

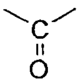 , 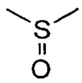 , 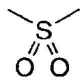 , 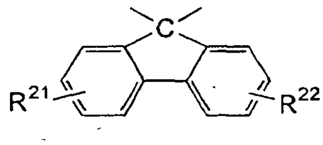 (14)

In the above formulas (14), $R^{17}$ and $R^{18}$ are each independently a hydrogen atom or hydrocarbon group having 1 to 10 carbon atoms. When there are $R^{17}$'s and $R^{18}$'s, they may be the same or different.

$R^{19}$ and $R^{20}$ are each independently a hydrogen atom or alkyl group having 1 to 3 carbon atoms. When there are $R^{19}$' s and $R^{20}$'s, they may be the same or different.

$R^{21}$ and $R^{22}$ are each independently a hydrogen atom or alkyl group having 1 to 3 carbon atoms. When there are $R^{21}$'s and $R^{22}$'s, they may be the same or different. c is an integer of 1 to 10, and d is an integer of 4 to 7.

W is particularly preferably at least one bonding group selected from the group consisting of bonding groups represented by the following formulas (15).

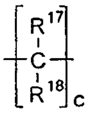 , 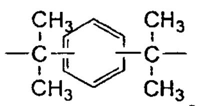 , 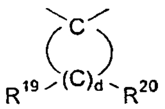 , 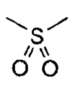 , 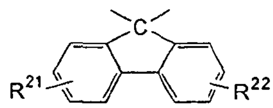 (15)

In the above formulas (15), $R^{17}$, $R^{18}$, $R^{19}$, $R^{20}$, $R^{21}$, $R^{22}$, c and d are as defined in the above formulas (14).

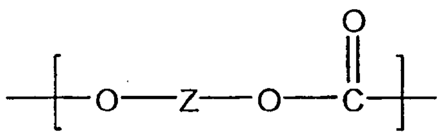 (16)

In the formula (16), Z is a divalent aliphatic group having 2 to 20 carbon atoms, preferably an aliphatic group having 3 to 15 carbon atoms. The aliphatic group is preferably an alkanediyl group having 2 to 20 carbon atoms, more preferably an alkanediyl group having 3 to 15 carbon atoms. Specific examples thereof include linear alkanediyl groups such as 1,3-propanediyl group, 1, 4-butanediyl group, 1,5-pentanediyl group and 1,6-hexanediyl group. Alicyclic alkanediyl groups such as cyclohexanediyl group and dimethyl cyclohexanediyl group may also be used. Out of these, 1,3-propanediyl group, 1,4-butanediyl group, hexanediyl group, spiroglycolyl group and dimethyl cyclohexanediyl group are preferred. These aliphatic groups may be used alone or in combination of two or more.

(biogenic matter content)

The polycarbonate resin prepared according to the present invention has a biogenic matter content measured in accordance with ASTM D6866 05 of 25 to 100 %, preferably 40 to 100 %, more preferably 50 to 100 %.

(specific viscosity)

The specific viscosity at 20°C of a solution prepared by dissolving 0.7 g of the polycarbonate resin of the present invention in 100 ml of methylene chloride is 0.2 to 0.6, preferably 0.2 to 0.45, more preferably 0.22 to 0.4. When the specific viscosity is lower than 0.2, it is difficult to provide sufficiently high mechanical strength to the obtained molded article. When the specific viscosity is higher than 0.6, the ratio of the terminal group inevitably lowers, thereby making it impossible to obtain a satisfactory terminal modification effect, and melt flowability becomes too high, whereby the melting temperature required for molding becomes higher than the decomposition temperature disadvantageously.

(OH value)

The polycarbonate resin prepared according to the present invention has ! an OH value of 2.5 x $10^3$ or less, preferably 2.0 x $10^3$ or less, more preferably 1.5 x $10^3$ or less. When the OH value is larger than 2.5 x $10^3$, the water absorbability of the polycarbonate resin increases and the heat stability thereof degrades disadvantageously. The OH value is calculated from a terminal ratio obtained by NMR measurement.

(water absorption coefficient)

The water absorption coefficient at 23°C after 24 hours of the polycarbonate resin prepared according to the present invention is preferably 0.75 % or less, more preferably 0.7 % or less. When the water absorption coefficient falls within the above range, the polycarbonate resin is preferred from the viewpoints of wet heat resistance and a low dimensional change rate.

(saturation water absorption coefficient)

The polycarbonate resin prepared according to the present invention has a saturation water absorption coefficient in 23°C water of preferably 0 to 5 %, more preferably 0 to 4.8 %, much more preferably 0 to 4.5 %. When the water absorption coefficient falls within the above range, the polycarbonate resin is preferred from the viewpoints of wet heat resistance and a low dimensional change rate.

(contact angle with water)

The contact angle with water of the polycarbonate resin prepared according to the present invention is preferably 70 to 180°, more preferably 72 to 180°. When the contact angle with water falls within the above range, the polycarbonate resin is preferred from the viewpoints of antifouling property, abrasion resistance and releasability.

(molecular weight retention)

The molecular weight retention at 120°C and 100 %RH after 11 hours of the polycarbonate resin prepared according to the present invention is preferably 80 % or more, more preferably 85 % or more.

(glass transition temperature: Tg)

The glass transition temperature (Tg) of the polycarbonate resin prepared according to the present invention is preferably 100°C or higher, more preferably 100 to 170°C, much more preferably 110 to 160°C. When Tg is lower than 100°C, the polycarbonate resin deteriorates in heat resistance and when Tg is higher than 170°C, the polycarbonate resin deteriorates in melt flowability at the time of molding.

(terminal group)

The polycarbonate resin prepared according to the present invention preferably contains a terminal group represented by the following formula (2) or (3).

$-O-R^1$ (2)

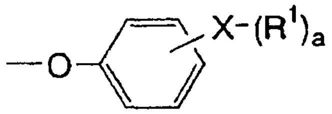

(3)

In the formulas (2) and (3), $R^1$ is an alkyl group having 4 to 30 carbon atoms, aralkyl group having to 30 carbon atoms, perfluoroalkyl group having 4 to 30 carbon atoms, phenyl group or group represented by the following formula (4) .

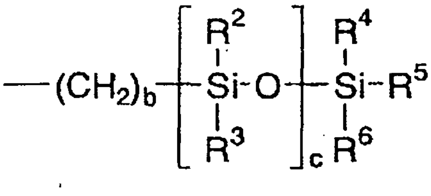

(4)

The number of carbon atoms of the alkyl group represented by $R^1$ is preferably 4 to 22, more preferably 8 to 22. Examples of the alkyl group include hexyl group, octyl group, nonyl group, decyl group, undecyl group, dodecyl group, pentadecyl group, hexadecyl group and octadecyl group.

The number of carbon atoms of the aralkyl group represented by $R^1$ is preferably 8 to 20, more preferably 10 to 20. Examples of the aralkyl group include benzyl group, phenethyl group, methylbenzyl group, 2-phenylpropan-2-yl group and diphenylmethyl group.

The number of carbon atoms of the perfluoroalkyl group represented by $R^1$ is preferably 2 to 20. Examples of the perfluoroalkyl group include 4,4,5,5,6,6,7,7,7-nonafluoroheptyl group, 4, 4, 5, 5, 6, 6, 7, 7, 8, 8, 9, 9, 9-tridecafluorononyl group and 4, 4, 5, 5, 6, 6, 7, 7, 8, 8, 9, 9, 10, 10, 11, 11, 11-heptadecafluround ecyl group.

In the formula (4), $R^2$, $R^3$, $R^4$, $R^5$ and $R^6$ are each independently at least one group selected from the group consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms.

Exmaples of the alkyl group having 1 to 10 carbon atoms in the formula (4) include methyl group, ethyl group, propyl group, butyl group and heptyl group. Examples of the cycloalkyl group having 6 to 20 carbon atoms include cyclohexyl group, cyclooctyl group, cyclononyl group and cyclodecyl group. Examples of the alkenyl group having 2 to 10 carbon atoms include ethenyl group, propenyl group, butenyl group and heptenyl group. Examples of the aryl group having 6 to 10 carbon atoms include phenyl group, tolyl group, dimethylphenyl group and naphthyl group. Examples of the aralkyl group having 7 to 20 carbon atoms include benzyl group, phenethyl group, methylbenzyl group, 2-phenylpropan-2-yl group and diphenylmethyl group.

In the formula (4), preferably, $R^2$, $R^3$, $R^4$, $R^5$ and $R^6$ are each independently at least one group selected from the group consisting of an alkyl group having 1 to 10 carbon atoms and aryl group having 6 to 10 carbon atoms. Particularly preferably, they are each independently at least one group selected from the group consisting of methyl group and phenyl group.

b is an integer of 0 to 3, preferably 1 to 3, more preferably 2 to 3. c is an integer of preferably 4 to 100, more preferably 4 to 50, much more preferably 8 to 50.

X in the formula (3) is at least one bond selected from the group consisting of a single bond, ether bond, thioether bond, ester bond, amino bond and amide bond. X is preferably at least one bond selected from the group consisting of a single bond, ether bond and ester bond. X is particularly preferably a single bond or an ester bond.

a is an integer of preferably 1 to 5, more preferably 1 to 3, much more preferably 1.

The terminal group represented by the above formula (2) or (3) is preferably derived from biogenic matter. Examples of the biogenic matter include long-chain alkyl alcohols having 14 or more carbon atoms such as cetanol, stearyl alcohol and behenyl alcohol.

The content of the terminal group represented by the formula (2) or (3) is preferably 0.01 to 7 mol%, more preferably 0.05 to 7 mol%, much more preferably 0.1 to 6.8 mol% based on the polymer main chain. When the content of the terminal group represented by the formula (2) or (3) falls within the above range, effects (moldability, high contact angle and moisture absorption resistance) caused by terminal modification are advantageously obtained.

<production process (I) of polycarbonate resin>

(not according to the invention)

The polycarbonate resin can be produced by reacting (A) an ether diol (component A) represented by the following formula (5), (B) a diol and/or a diphenol (component B) except for the component A, (C) a diester carbonate (component C) and (D) 0.01 to 7 mol% based on the total of the component A and the component B of a hydroxy compound (component D) represented by the following formula(6) or (7) (production process (I)).

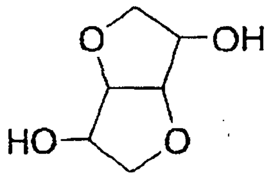

(5)

$HO\text{-}R^1$ (6)

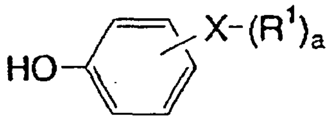

(7)

In the formulas (6) and (7), $R^1$, X and a are as defined in the formulas (2) and (3).

(ether diol: component A)

The ether diol (component A) is preferably one of isosorbide, isomannide and isoidide. These ether diols derived from sugar are also obtained from biomass in the natural world and so-called "renewable resources". Isosorbide can be produced by hydrogenating D-glucose obtained from starch and then dehydrating it. The other ether diols are obtained through a similar reaction except for the starting material. The component A is particularly preferably isosorbide (1,4:3,6-dianhydro-D-sorbitol). Isosorbide is an ether diol which can be easily produced from starch, can be acquired abundantly as a resource and is superior to isommanide and isoidide in production ease, properties and application range.

The amount of the component A is preferably 30 to 100 mol%, more preferably 50 to 95 mol%, much more preferably 55 to 90 mol% based on the total of the component A and the component B.

(diol, diphenol: component B)

The polycarbonate resin is produced by using a diol and/or a diphenol (component B) except for the component A besides the ether diol (component A) represented by the above formula (5)). The amount of the component B is preferably 0 to 70 mol%, more preferably 5 to 50 mol%, much more preferably 10 to 45 mol% based on the total of the component A and the component B.

(diol)

The diol except for the ether diol (component A) is preferably a diol represented by the following formula (18).

**HO-Z-OH (18)**

In the above formula (18), Z is as defined in the above formula (16).

The diol is preferably an aliphatic diol having 2 to 20 carbon atoms, more preferably an aliphatic diol having 3 to 15 carbon atoms. Specific examples thereof include linear diols such as 1,3-propanediol, 1,4-butanediol, 1, 5-pentanediol and 1, 6-hexanediol, and alicyclic alkylenes such as cyclohexanediol and cyclohexanedimethanol. Out of these, 1,3-propanediol, 1,4-butanediol, hexanediol, spiroglycol and cyclohexanedimethanol are preferred. These diols may be used alone or in combination of two or more.

(diphenol)

The diphenol is preferably a bisphenol represented by the following formula (17).

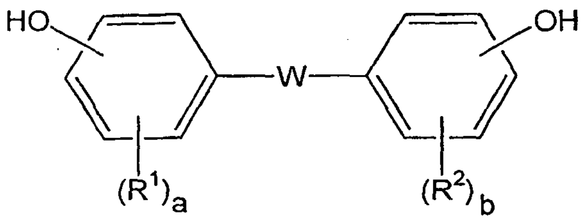

(17)

In the formula (17), W, $R^1$, $R^2$, a and b are as defined in the above formula (12).

Examples of the bisphenol include 4,4'-biphenol,
3,3',5,5'-tetrafluoro-4,4'-biphenol,
α,α'-bis(4-hydroxyphenyl)-o-diisopropylbenzene,
α,α'-bis(4-hydroxyphenyl)-m-diisopropylbenzene (commonly known as "bisphenol M"),
2,2-bis(4-hydroxyphenyl)-4-methylpentane,
α,α'-bis(4-hydroxyphenyl)-p-diisopropylbenzene,
α,α'-bis(4-hydroxyphenyl)-m-bis(1,1,1,3,3,3-hexafluoroisopropyl)benzene, 9,9-bis(4-hydroxyphenyl) fluorene, 9,9-bis(4-hydroxy-3-methylphenyl)fluorene,
9,9-bis(3-fluoro-4-hydroxyphenyl)fluorene,
9,9-bis(4-hydroxy-3-trifluoromethylphenyl)fluorene,
1,1-bis(4-hydroxyphenyl)cyclohexane,
1,1-bis(4-hydroxyphenyl)-3,3,5-trimethylcyclohexane,
1,1-bis(4-hydroxyphenyl)-4-isopropylcyclohexane,
1,1-bis(3-cyclohexyl-4-hydroxypheny)cyclohexane,
1,1-bis(4-hydroxyphenyl)cyclopentane,

1,1-bis(3-fluoro-4-hydroxyphenyl)cyclohexane,
1,1-bis(4-hydroxyphenyl)perfluorocyclohexane,

4,4'-dihydroxydiphenyl ether,
4,4'-dihydroxy-3,3'-dimethyldiphenyl ether,
4,4'-dihydroxydiphenyl sulfone, 4,4'-dihydroxydiphenyl sulfoxide, 4,4'-dihydroxydiphenyl sulfide,
3,3'-dimethyl-4,4'-dihydroxydiphenyl sulfide,
3,3'-dimethyl-4,4'-dihydroxydiphenyl sulfone,
4,4'-dihydroxydiphenyl sulfone,
4,4'-dihydroxy-3,3'-diphenyl sulfide,
4,4'-dihydroxy-3,3'-diphenyl sulfoxide,
4,4'-dihydroxy-3,3'-diphenyl sulfone,
1,1-bis(4-hydroxyphenyl)methane,
1,1-bis(4-hydroxyphenyl)ethane,
2,2-bis(4-hydroxyphenyl)propane (commonly known as "bisphenol A"), 1,1-bis(4-hydroxyphenyl)-1-phenylethane,
2,2-bis(4-hydroxy-3-methylphenyl)propane (commonly known as "bisphenol C"), 2,2-bis(4-hydroxyphenyl)butane,
2,2-bis(4-hydroxyphenyl)pentane,
2,2-bis(4-hydroxy-3-phenylphenyl)propane,

2,2-bis(3-isopropyl-4-hydroxyphenyl)propane,
2,2-bis(3-tert-butyl-4-hydroxyphenyl)propane,
2,2-bis(4-hydroxyphenyl)butane,
4,4-bis(4-hydroxyphenyl)heptane,
2,2-bis(4-hydroxyphenyl)octane,
1,1-bis(4-hydroxyphenyl)decane,
1,1-bis(3-methyl-4-hydroxyphenyl)decane,
1,1-bis(2,3-dimethyl-4-hydroxyphenyl)decane,
2,2-bis(3-bromo-4-hydroxyphenyl)propane,

bis(4-hydroxyphenyl)diphenylmethane,
1,1-bis(4-hydroxyphenyl)-4-isopropylcyclohexane,
2,2-bis(4-hydroxyphenyl)-1,1,1,3,3,3-hexafluoropropane (commonly known as "bisphenol AF"),
2,2-bis(4-hydroxy-3-methylphenyl)-1,1,1,3,3,3-hexafluoro propane,
2,2-bis(3,5-dimethyl-4-hydroxyphenyl)-1,1,1,3,3,3-hexafluoropropane,
2,2-bis(3-fluoro-4-hydroxyphenyl)-1,1,1,3,3,3-hexafluoro propane,
2,2-bis(3,5-difluoro-4-hydroxyphenyl)-1,1,1,3,3,3-hexafluoropropane,
2,2-bis(3,5-dibromo-4-hydroyphenyl)propane,
2,2-bis(3,5-dichloro-4-hydroxyphenyl)propane,
2,2-bis(3,5-dimethyl-4-hydroxyphenyl)propane and
2,2-bis(3-cyclohexyl-4-hydroxyphenyl)propane.
Out of these, bisphenol M,
9,9-bis(4-hydroxy-3-methylphenyl)fluorene, 1,1-bis(4-hydroxyphenyl)cycolohexane,
1,1-bis(4-hydroxyphenyl)-3,3,5-trimethylcyclohexane,
2,2-bis(4-hydroxyphenyl)-4-methylpentane,
3,3'-dimethyl-4,4'-dihydroxydiphenyl sulfide, bisphenol A, bisphenol C, bisphenol AF and
1,1-bis(4-hydroxyphenyl)decane are preferred. These bisphenols may be used alone or in combination of two or more.

(diester carbonate: component C)

The polycarbonate resin is produced by using a diester carbonate (component C) to form a carbonate bond.

The diester carbonate (component C) is, for example, a diester carbonate having an aryl group or aralkyl group having 6 to 12 carbon atoms, or an alkyl group having 1 to 4 carbon atoms, all which may be substituted. Specific examples thereof include diphenyl carbonate, bis(chlorophenyl)carbonate, m-cresyl carbonate, dinaphthyl carbonate, bis(diphenyl)carbonate, dimethyl carbonate, diethyl carbonate and dibutyl carbonate. Out of these, diphenyl carbonate is particularly preferred.

As for the amount of the diester carbonate (component C), the (component C/ (component A + component B)) molar ratio of the diester carbonate (component C) to the total of the ether diol (component A) and the diol and the diphenol (component B) except for the component A is preferably 1.05 to 0.97, more preferably 1.03 to 0.97, much more preferably 1.03 to 0.99. When the amount of the component C is larger than 1.05 mols, a sufficiently high degree of polymerization is not obtained. When the amount of the component C is smaller than 0.97 mol, not only polymerization does not proceed but also an unreated ether diol or an unreacted hydroxy compound remains.

(hydroxy compound: component D)

The polycarbonate resin is produced by using a hydroxy compound (component D) represented by the following formula (6) or (7) besides the components A to C.

In the hydroxy compound (component D) represented by the formula (6) or (7), $R^1$, X, a, $R^2$, $R^3$, $R^4$, $R^5$, $R^6$, b and c are as defined in the formulas (2) and (3). The hydroxy compounds (component D) may be used alone or in combination of two or more. When two or more hydroxy compounds are used, the hydroxy compound (component D) represented by the formula (6) or (7) and another hydroxy compound except for the above hydroxy compound may be used in combination. The hydroxy compound (component D) improves the heat resistance, heat stability, moldability and water absorption resistance of the polycarbonate.

$$HO\text{-}R^1 \qquad (6)$$

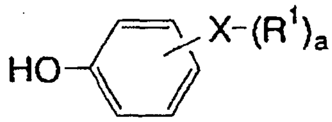

(7)

Since the polycarbonate resin has a recurring unit derived from a raw material obtained from a renewable resource such as a plant in the main chain structure, preferably, the hydroxy compound (component D) constituting the terminal structure is also derived from biogenic matter such as a plant. Hydroxy compounds obtained from plants include long-chain alkyl alcohols having 14 or more carbon atoms obtained from vegetable oils (such as cetanol, stearyl alcohol and behenyl alcohol).

The amount of the hydroxy compound (component D) is preferably 0.01 to 7 mol%, more preferably 0.05 to 7 mol%, much more preferably 0.1 to 6. 8 mol% based on the total amount of the ether diol (component A) and the diol and diphenol (component B) except for the ether diol. When the amount of the hydroxy compound is smaller than 0.01 mol%, the terminal modification effect is not obtained. When the amount of the hydroxy compound is larger than 7 mol%, the amount of an end-sealing agent is too large, thereby making it impossible to obtain a polycarbonate resin having a polymerization degree high enough for molding. The time when the hydroxy compound (component D) is added maybe the initial stage or the latter stage of a reaction.

The reaction may be carried out by melt polymerization. The melt polymerization may be carried out by distilling off an alcohol or a phenol formed by the transesterification reaction of the components A to D at a high temperature under reduced pressure.

(reaction temperature)

The reaction temperature is preferably as low as possible in order to suppress the decomposition of the ether diol and obtain a resin which is rarely colored and has high viscosity. However, to make the polymerization reaction proceed properly, the polymerization temperature is preferably 180 to 280°C, more preferably 180 to 270°C.

Preferably, after the ether diol and the diester carbonate are heated at normal pressure to be pre-reacted with each other in the initial stage of the reaction, the pressure is gradually reduced to about $1.3 \times 10^{-3}$ to $1.3 \times 10^{-5}$ MPa in the latter stage of the reaction so as to facilitate the distillation-off of the formed alcohol or phenol. The reaction time is generally about 1 to 4 hours.

(polymerization catalyst)

A polymerization catalyst may be used to accelerate the polymerization rate. Examples of the polymerization catalyst include alkali metal compounds such as sodium hydroxide, potassium hydroxide, sodium carbonate, potassium carbonate, sodium hydrogen carbonate, sodium salts of a dihydric phenol and potassium salts of a dihydric phenol. Alkali earth metal compounds such as calcium hydroxide, barium hydroxide and magnesium hydroxide are also included.

Nitrogen-containing basic compounds such as tetramethylammonium hydroxide, tetarethylammonium hydroxide, tetrabutylammonium hydroxide, trimethylamine and triethylamine may also be used.

Alkoxides of an alkali metal or an alkali earth metal, and organic acid salts, zinc compounds, boron compounds, aluminum compounds, silicon compounds, germanium compounds, organic tin compounds, lead compounds, osmium compounds, antimony compounds, manganese compounds, titanium compounds and zirconium compounds of an alkali metal or an alkali earth metal may also be used. They may be used alone or in combination of two or more.

At least one compound selected from the group consisting of a nitrogen-containing basic compound, an alkali metal compound and an alkali earth metal compound is preferably used as the polymerization catalyst. Out of these, a combination of a nitrogen-containing basic compound and an alkali metal compound is particularly preferably used.

The amount of the polymerization catalyst is preferably $1 \times 10^{-9}$ to $1 \times 10^{-3}$ equivalent, more preferably $1 \times 10^{-8}$ to $5 \times 10^{-4}$ equivalent based on 1 mol of the diester carbonate (component C).

The reaction system is preferably maintained in a gas atmosphere such as nitrogen inactive to raw materials, a reaction mixture and a reaction product. Inert gases except for nitrogen include argon. Additives such as an antioxidant may be further added as required.

(catalyst deactivator)

A catalyst deactivator may be added to the polycarbonate resin. Known catalyst deactivators may be used as the catalyst deactivator. Out of these, ammonium salts and phosphonium salts of sulfonic acid are preferred. Ammonium salts and phosphonium salts of dodecylbenzenesulfonic acid such as tetrabutylphosphonium salts of dodecylbenzenesulfonic acid are more preferred. Ammonium salts and phosphonium salts of paratoluenesulfonic acid such as tetrabutylammonium salts of paratoluenesulfonic acid are also preferred. Methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used as the ester of sulfonic acid. Out of these, tetrabutylphosphonium salts of dodecylbenzenesulfonic acid are most preferably used. The amount of the catalyst deactivator is preferably 0.5 to 50 mols, more preferably 0.5 to 10 mols, much more preferably 0.8 to 5 mols based on 1 mol of the polymerization catalyst selected from an alkali metal compound and/or an alkali earth metal compound.

Therefore, it is preferred that an ether diol (component A), a diol and/or a diphenol (component B) except for the ether diol, a diester carbonate (component C) and a hydroxy compound (component D) should be reacted by heating at normal pressure and then melt polycondensed while they are heated at 180 to 280°C under reduced pressure.

<production process (II) of polycarbonate resin>

(not according to the invention)

The polycarbonate resin can be produced by reacting an ether diol (component A), a diol and/or a diphenol (component B) except for the component A and phosgene (component E) in an inert solvent in the presence of an acid binder such as pyridine. That is, the polycarbonate resin can be produced by reacting (A) an ether diol (component A) represented by the following formula (5), (B) a diol and/or a diphenol (component B) except for the component A, and (E) phosgene (component E) in an inert solvent in the presence of an acid binder, wherein
a hydroxy compound (component D) represented by the following formula (6) or (7) is reacted as an end-sealing agent (production process (II)).

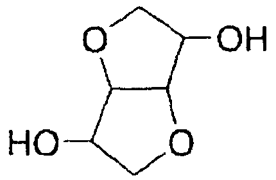

(5)

**HO-R$^1$** **(6)**

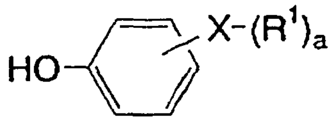

(7)

In the formulas (6) and (7), $R^1$, X, a, $R^2$, $R^3$, $R^4$, $R^5$, $R^6$, b and c are as defined in the above formulas (2) and (3).
The components A, B and D are the same as those used in the production process (I). The ether diol (component A) is preferably isosorbide (1,4:3,6-dianhydro-D-sorbitol). The hydroxy compound (component D) is preferably derived from biogenic matter. Heat stability is improved by using the hydroxy compound (component D) represented by the formula (6) or (7) as an end-sealing agent.

(acid binder)

The acid binder is preferably at least one selected from the group consisting of pyridine, quinoline and dimethylaniline. The acid binder is particularly preferably pyridine. The amount of the acid binder is preferably 2 to 100 mols, more preferably 2 to 50 mols based on 1 mol of phosgene (component E).

(inert solvent)

Examples of the inert solvent include hydrocarbons such as benzene, toluene and xylene, and halogenated hydrocarbons such as methylene chloride, chloroform, dichloroethane, chlorobenzene and dichlorobenzene. Out of these, halogenated hydrocarbons such as methylene chloride, chloroform, dichloroethane, chlorobenzene and dichlorobenzene are preferred. Methylene chloride is most preferred. The reaction temperature is preferably 0 to 40°C, more preferably 5 to 30°C. The reaction time is generally a few minutes to a few days, preferably 10 minutes to 5 hours.

<production process (III) of polycarbonate resin>

The polycarbonate resin having a low OH value can be produced according to the present invention without using an end-sealing agent.
That is, the polycarbonate resin can be produced according to the present invention by reacting a dihydroxy component consisting of 30 to 100 mol% of an ether diol (component A) represented by the following formula (5)

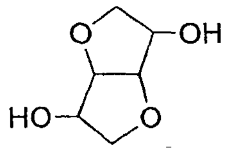

(5)

and 0 to 70 mol% of a diol or a diphenyl (component B) except for the component A with a diester carbonate component (component C) by heating at normal pressure in the presence of polymerization catalyst and then melt polycondensing the reaction product while heating at 180 to 280°C under reduced pressure, wherein

(i) the (component C/(component A + component B)) ratio of the component C to the dihydroxy component becomes 1.05 to 0.97 at the start of polymerization; and
(ii) the component C is further added to ensure that the (component C/(component A + component B)) ratio of the component C to the dihydroxy component during polymerization becomes 1.08 to 1.00.

Although the reaction temperature is preferably as low as possible in order to suppress the decomposition of the ether diol (component A) and obtain a resin which is rarely colored and has high viscosity, the polymerization temperature is preferably 180 to 280°C, more preferably 180 to 270°C in order to make a polymerization reaction proceed properly.

Preferably, the dihydroxy component and the diester carbonate are heated at normal pressure in the initial stage of the reaction to be pre-reacted with each other, and the pressure is gradually reduced to about 1.3 x $10^{-3}$ to 1.3 x $10^{-5}$ MPa in the latter stage of the reaction to facilitate the distillation-off of the formed alcohol or phenol. The reaction time is generally about 0.5 to 4 hours.

The diester carbonate (component C) includes an ester such as an aryl group or aralkyl group having 6 to 20 carbon atoms, or an alkyl group having 1 to 18 carbon atoms, all of which may be substituted. Specific examples of the diester carbonate include diphenyl carbonate, bis(chlorophenyl)carbonate, m-cresyl carbonate, dinaphthyl carbonate, bis (p-butylphenyl) carbonate, dimethyl carbonate, diethyl carbonate and dibutyl carbonate. Out of these, diphenyl carbonate is particularly preferred.

The diester carbonate (component C) is divided into two to be added in the initial stage of the reaction (start of polymerization) and the middle stage of the reaction (during polymerization). At the start of polymerization, the (component C/(component A + component B)) ratio of the diester carbonate to the dihydroxy component is set to 1.05 to 0.97.

During polymerization, the diester carbonate (component C) is further added to ensure that the (component C/(component A + component B)) ratio of the diester carbonate (component C) to the dihydroxy component becomes 1.08 to 1.00.

The weight ratio of the diester carbonate (component C) added at the start of polymerization to the diester carbonate (component C) added during polymerization is preferably 99: 1 to 90: 10, more preferably 98: 2 to 95: 5. When the diester carbonate (component C) is not added in the middle stage of the reaction, the OH value exceeds the preferred range with the result that the polycarbonate resin exhibits high water absorbability, thereby causing a dimensional change or the deterioration of heat stability. When the diester carbonate is added at a time at the start of polymerization without being further added during polymerization to ensure that the ratio of the diester carbonate to the dihydroxy component becomes higher than 1.05, molar balance is lost and a sufficiently high degree of polymerization is not obtained disadvantageously.

At least one polymerization catalyst selected from the group consisting of a nitrogen-containing basic compound, an alkali metal compound and an alkali earth metal compound is used.

Examples of the alkali metal compound include sodium hydroxide, potassium hydroxide, sodium carbonate, potassium carbonate, sodium hydrogen carbonate, and sodium salts and potassium salts of a dihydric phenol. Examples of the alkali earth metal compound include calcium hydroxide, barium hydroxide and magnesium hydroxide. Examples of nitrogen-containing basic compound include tetramethylammonium hydroxide, tetarethylammonium hydroxide, tetrabutylammonium hydroxide, trimethylamine and triethylamine. They may be used alone or in combination of two or more. Out of these, a combination of a nitrogen-containing basic compound and an alkali metal compound is preferably used.

The amount of the polymerization catalyst is preferably 1 x $10^{-9}$ to 1 x $10^{-3}$ equivalent, more preferably 1 x $10^{-8}$ to 5 x $10^{-4}$ equivalent based on 1 mol of the diester carbonate (component C). The reaction system is preferably maintained in a gas atmosphere inactive to raw materials, a reaction mixture and a reaction product, such as nitrogen. Inert gases except for nitrogen include argon. Additives such as an antioxidant may be further added as required.

A catalyst deactivator may also be added to the polycarbonate resin obtained by the above production process. Known catalyst deactivators may be used effectively as the catalyst deactivator. Out of these, ammonium salts and phosphonium salts of sulfonic acid are preferred, and the above salts of dodecylbenzenesulfonic acid such as tetrabutylphosphonium salts of dodecylbenzenesulfonic acid and the above salts of paratoluenesulfonic acid such as tetrabutylammonium salts of paratoluenesulfonic acid are more preferred. Methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used as the ester of sulfonic acid. Out of these, tetrabutylphosphonium salts of dodecylbenzenesulfonic acid are most preferably used.

The amount of the catalyst deactivator is preferably 0.5 to 50 mols, more preferably 0. 5 to 10 mols, much more preferably 0.8 to 5 mols based on 1 mol of the polymerization catalyst selected from an alkali metal compound and/or an alkali earth metal compound.

The polycarbonate resin may be copolymerized with an aliphatic diol and/or an aromatic bisphenol. The amount of the aliphatic diol and/or the aromatic bisphenol is 70 mol% or less, preferably 50 mol% or less, more preferably 35 mol% or less of the whole hydroxy component. They may be used alone or in combination of two or more.

Examples of the aliphatic diol include linear diols such as ethylene glycol, 1,3-propanediol, 1,4-butanediol, 1,5-pentanediol and 1, 6-hexanediol, and alicyclic diols such as cyclohexanediol, cyclohexanedimethanol and terpene-based dimethylol. Out of these, 1,3-propanediol, 1,4-butanediol, hexanediol, cyclohexanedimethanol, spiro glycol and terpene-based dimethylol are preferred, and 1,3-propaneidol, 1,4-butanediol and terpene-based dimethylol are particularly preferred as they may be derived from biogenic matter.

Examples of the aromatic bisphenol include
2,2-bis(4-hydroxyphenyl)propane (commonly known as

"bisphenol A"), 1,1-bis(4-hydroxyphenyl)cyclohexane,
1,1-bis(4-hydroxyphenyl)-3,3,5-trimethylcyclohexane,

4,4'-(m-phenylenediisopropylidene)diphenol,
9,9-bis(4-hydroxy-3-methylphenyl)fluorene,
2,2-bis(4-hydroxy-3-methylphenyl)propane,
2,2-bis(4-hydroxyphenyl)-4-methylpentane,
1,1-bis(4-hydroxyphenyl)decane and
1,3-bis{2-(4-hydroxyphenyl)propyl}benzene. Out of these,
2,2-bis(4-hydroxyphenyl)propane,
4,4'-(m-phenylenediisopropylidene)diphenol,
2,2-bis(4-hydroxyphenyl)-4-methylpentane and
1, 1-bis (4-hydroxyphenyl) decane are particularly preferred.

(other components)

Various functionalizing agents may be added to the resin composition according to application purpose. The agents include a heat stabilizer, a stabilizing aid, a plasticizer, an antioxidant, an optical stabilizer, a nucleating agent, a heavy metal inactivating agent, a flame retardant, a lubricant, an antistatic agent and an ultraviolet absorbent.

Further, the polycarbonate resin may be combined with an organic or inorganic filler or fiber to be used as a composite according to application purpose. Examples of the filler include carbon, talc, mica, wollastonite, montmorillonite and hydrotalcite. Examples of the fiber include natural fibers such as kenaf, synthetic fibers, glass fibers, quartz fibers and carbon fibers.

The resin composition may be mixed with, for example, an aliphatic polyester, an aromatic polyester, an aromatic polycarbonate resin, a polyamide, polystyrene, a polyolefin, a polyacryl, ABS, a polyurethane or a polymer derived from biogenic matter such as polylactic acid to be alloyed.

Examples

The following examples are provided for the purpose of further illustrating the present invention but are in no way to be taken as limiting. "Parts" in the examples means parts by weight and "%" means wt%. Evaluations were made by the following methods.

(1) Specific viscosity ($\eta_{sp}$)

A pellet was dissolved in methylene chloride to a concentration of 0.7 g/dL so as to measure the specific viscosity of the resulting solution at 20°C with an Ostwald's viscosimeter (RIGO AUTO VISCOSIMETER TYPE VMR-0525·PC). The specific viscosity ($\eta_{sp}$) was obtained from the following equation.

$$\eta_{sp} = t/t_0 - 1$$

t: flow time of a specimen solution
to: flow time of a solvent alone

(2) Terminal modification group content

$^1$H-NMR of the pellet in a heavy chloroform solution was measured with the JNM-AL400 of JEOL LTD. to obtain a terminal modification group content from the integral ratio of a specific proton derived from the main chain carbonate constituent unit and a specific proton derived from a hydroxyl-terminated compound. The terminal modification group content is the ratio (mol%) of the hydroxyl-terminated compound to the main chain carbonate constituent unit.

(3) Glass transition temperature (Tg)

This was measured with the DSC (Model DSC2910) of TA Instruments Co., Ltd. by using the pellet.

(4) 5 % weight loss temperature (Td)

This was measured with the TGA (Model TGA2950) of TA Instruments Co., Ltd. by using the pellet.

(5) Moldability

A pellet was injection molded by means of the JSWJ-75EIII of The Japan Steel Works, Ltd. to evaluate the shape of a 2 mm-thick molded plate visually (mold temperature: 70 to 90°C, molding temperature: 220 to 260°C) . Moldability

○: no turbidity, cracking, shrinkage and silver streak by decomposition is seen
×: turbidity, cracking, shrinkage and silver streak by decomposition are seen

(6) Contact angle

The contact angle with pure water of the 2 mm-thick molded plate was measured by means of the drip type contact angle meter of Kyowa Interface Science Co., Ltd.

(7) Water absorption coefficient

24 hours after a 2 mm-thick molded plate which had been dried at 100°C for 24 hours in advance was immersed in 25°C water, the weight of the molded plate was measured to calculate its water absorption coefficient from the following equation.

Water absorption coefficient = {weight of sample plate (after water absorption) - weight of sample plate (before water absorption)}/weight of sample plate (before water absorption) x 100 (wt%)

(8) Film thickness

The thickness of the film was measured by means of the film thickness meter of Mitutoyo Corporation.

(9) Photoelastic constant

A film having a width of 1 cm and a length of 6 cm was prepared, and the phase differences for light having a wavelength of 550 nm under no load and under loads of 1N, 2N and 3N of this film were measured with the M220

spectroscopic ellipsometer of JASCO Corporation Co., Ltd. to calculate (phase difference) x (film width)/ (load) so as to obtain the photoelastic constant of the film.

(10) total light transmittance and haze value of film

They were measured with the NDH-2000 turbidimeter of Nippon Denshoku Industries Co., Ltd.

(11)phase difference values (R(450)), R(550)) and their wavelength dispersion (R(450)/R(550)

They were measured at wavelengths of 450 nm and 550 nm with the M220 spectroscopic ellipsometer of JASCO Corporation. The phase difference values for light vertically incident upon the film plane were measured.

(12) phase difference value Rth in film thickness direction

The M220 spectroscopic ellipsometer of JASCO Corporation. was used for measurement at a wavelength of 550 nm. The in-plane phase difference value R was obtained by measuring light incident upon the film plane at a right angle. The phase difference value Rth in the film thickness direction was obtained by measuring phase difference values at each angle by changing the angle between incident light and the film plane little by little, curve fitting the obtained values with the known formula of an index ellipsoid so as to obtain 3-D refractive indices $n_x$, $n_y$ an $n_z$, and inserting them into the equation Rth = $\{(n_x + n_y)/2-n_z\}$ x d. Since the average refractive index of the film was required, it was measured by means of the Abbe refractometer 2-T of Atago Co., Ltd.

(13) OH value

$^1$H-NMR of a pellet in a heavy chloroform solution was measured by means of the JNM-AL400 of JEOL Corporation to obtain the OH value from the specific proton of a hydroxyl terminal derived from a compound represented by the formula (5) and the specific proton of a terminal group derived from a compound (diester carbonate or another specific compound) except for the compound represented by the formula (5) based on the following equation.

$$\text{OH value} = R_m \times R_{OH} \times 17$$

$R_m$: {1000000/polymerization degree (weight average molecular weight)} x 2
$R_{OH}$: ratio to all terminal groups of a hydroxyl-terminated compound obtained from the integral ratio of $^1$H-NMR (a hydroxy compound terminal group derived from the compound represented by the formula (5) and a terminal group derived from a compound except for the compound represented by the formula (5) such as diester carbonate)

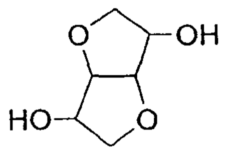

(5)

(14) biogenic matter content

The content of biogenic matter was measured from a biogenic matter content test based on radiocarbon concentration (percent modern carbon; C14) in accordance with ASTM D6866 05.

(15) molecular weight retention under wet heat condition

After a pellet whose weight average molecular weight (Mw) had been measured by means of the GPC (gel permeation chromatography) (column temperature of 40°C, chloroform solvent) of Polymer Laboratories Co., Ltd. through comparison between standard polystyrene and the sample was left at 120°C and 100 %RH for 11 hours, its weight average molecular weight was measured. After the pellet was left at 120°C and at a relative humidity lower than 0.1%RH for 15 days, its weight average molecular weight was measured.

Molecular weight retention = molecular weight of pellet after wet heat test/molecular weight of pellet before wet heat test x 100 (%)

(16) saturation water absorption coefficient

A molded plate having a length of 60 mm, a width of 60 mm and a thickness of 1 mm which had been dried at 100°C for 24 hours was immersed in 23°C water and taken out every day to measure its weight so as to calculate its water absorption coefficient from the following equation. The saturation water absorption coefficient is a water absorption coefficient when the weight of the above molded plate does not increase any more by water absorption.

Water absorption coefficient = (weight of molded plate after water absorption - weight of molded plate before water absorption)/weight of molded plate before water absorption x 100 (%)

(17) dimensional change rate

A molded plate having a length of 100 mm, a width of 50 mm and a thickness of 4 mm which had been dried at 100 ° C for 24 hours was immersed in 23°C water and taken out regularly to measure its weight. The time when the weight of the above molded plate does not increase any more by water absorption was taken as saturation water absorption time, and the dimensional change at this time was measured. The dimensional change rate is represented by the following equation, and the average of a long side dimensional change and a short side dimensional change is shown as the dimensional change rate of this molded plate.

Dimensional change rate = {length of long side (short side) after water absorption - length of long side (short side) before water absorption}/length of long side (short side) before water absorption x 100 (%)

Example 13

7, 307 parts by weight (50 mols) of isosorbide and 10,711 parts by weight (50 mols) of diphenyl carbonate were fed to a reactor, and 1.4 parts by weight ($3 \times 10^{-4}$ mol based on 1 mol of the diphenyl carbonate component) of tetramethylammonium hydroxide and $6.1 \times 10^{-3}$ part by weight ($3 \times 10^{-6}$ mol based on 1 mol of the diphenyl carbonate component) of sodium hydroxide as polymerization catalysts were fed to the reactor and dissolved by heating at 180°C at normal pressure in a nitrogen atmosphere. The inside pressure of the reactor was gradually reduced to $13.3 \times 10^{-3}$ MPa over 30 minutes under agitation while the formed phenol was distilled off. After a reaction was carried out in this state for 20 minutes, the temperature was raised to 200°C, the pressure was gradually reduced over 20 minutes to carry out the reaction at $4.00 \times 10^{-3}$ MPa for 20 minutes while the phenol was distilled off, and the temperature was further raised to 220°C to carry out the reaction for 30 minutes and then to 250°C to carry out the reaction for 30 minutes. When the phenol was distilled off in an amount of 93 % (105 g) of the theoretical distillation amount, the inside of the reactor was returned to normal pressure with nitrogen, 321 parts by weight (1.5 mols) of diphenyl carbonate was added, and the pressure was gradually reduced to $2.67 \times 10^{-3}$ MPa. The reaction was continued at this pressure for 10 minutes and then at $1.33 \times 10^{-3}$ MPa for 10 minutes, when the pressure was further reduced to $4.00 \times 10^{-5}$ MPa, the temperature was gradually raised to 250°C, and the reaction was carried out at 250°C and $6. 66 \times 10^{-5}$ MPa for 1 hour in the end. As a result, a polymer having a specific viscosity of 0.35 was obtained. The evaluation results of this polymer are shown in Table 5.

Example 14

Raw materials were fed to carry out a polymerization reaction in the same manner as in Example 13, and a pellet having a specific viscosity of 0.32 was obtained by polymerization in the same manner as in Example 13 except that 642 parts by weight (3.0 mols) of diphenyl carbonate was further added during a reaction. The evaluation results are shown in Table 5.

Example 15

A polymer having a specific viscosity of 0.34 was obtained by polymerization in the same manner as in Example 13 except that 6,210 parts by weight (42.5 mols) of isosorbide, 2,449 parts by weight (7.5 mols; melting point of 92°C) of 1,1-bis(4-hydroxyphenyl)decane and 10,711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Example 16

A polymer having a specific viscosity of 0.28 was obtained by polymerization in the same manner as in Example 13 except that 6,210 parts by weight (42.5 mols) of isosorbide, 2,020 parts by weight (7.5 mols; melting point of 154°C) of 2,2-bis(4-hydroxyphenyl)-4-methylpentane and 10,711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Example 17

A polymer having a specific viscosity of 0.25 was obtained by polymerization in the same manner as in Example 13 except that 4, 969 parts by weight (34 mols) of isosorbide, 3,652 parts by weight (16 mols) of 2,2-bis(4-hydroxyphenyl)propane and 10,711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Example 18

A polymer having a specific viscosity of 0.27 was obtained by polymerization in the same manner as in Example 13 except that 5, 115 parts by weight (35 mols) of isosorbide, 1, 142 parts by weight (15 mols) of 1, 3-propanediol and 10, 711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Example 19

A polymer having a specific viscosity of 0.27 was obtained by polymerization in the same manner as in Example 13 except that 5, 846 parts by weight (40 mols) of isosorbide, 1, 442 parts by weight (10 mols) of cyclohexanedimethanol and 10,711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Example 20

A polymer having a specific viscosity of 0.29 was obtained by polymerization in the same manner as in Example 13 except that 6, 576 parts by weight (45 mols) of isosorbide, 1,520 parts by weight (5 mols) of 3,9-bis(2-hydroxy-1,1-dimethylethyl)-2,4,8,10-tetraoxaspiro(5,5)undecane and 10,711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Example 21

A polymer having a specific viscosity of 0.28 was obtained by polymerization in the same manner as in Example

13 except that 5,846 parts by weight (40 mols) of isosorbide, 1,182 parts by weight (10 mols) of 1, 6-hexanediol and 10, 711 parts by weight (50 mols) of diphenyl carbonate were used to carry out a polymerization reaction and 321 parts by weight (1.5 mols) of diphenyl carbonate was further added during the reaction. The evaluation results of this polymer are shown in Table 5.

Comparative Example 6

A polymer having a specific viscosity of 0.34 was obtained by polymerization in the same manner as in Example 13 except that 7,307 parts by weight (50 mols) of isosorbide and 10,711 parts by weight (50 mols) of diphenyl carbonate were fed to a reactor and diphenyl carbonate was not further added during the reaction. The evaluation results of this polymer are shown in Table 5.

Comparative Example 7

A polymer having a specific viscosity of 0.12 was obtained by polymerization in the same manner as in Example 13 except that 7, 307 parts by weight (50 mols) of isosorbide and 11,354 parts by weight (53 mols) of diphenyl carbonate were fed to a reactor and diphenyl carbonate was not further added during the reaction. The evaluation results of this polymer are shown in Table 5. Since the polymer was very fragile and could not be molded, its water absorption coefficient could not be measured.

Table 5

| | Unit | Ex. 13 | Ex. 14 | Ex. 15 | Ex. 16 | Ex. 17 | Ex. 18 |
|---|---|---|---|---|---|---|---|
| Isosorbide | mol | 50 | 50 | 42.5 | 42.5 | 34 | 35 |
| 2,2-bis(4-hydroxyphenyl)propane | mol | - | - | - | - | 16 | - |
| 1,1-bis(4-hydroxyphenyl)decane | mol | - | - | 7.5 | - | - | - |
| 2,2-bis(4-hydroxyphenyl)-4-methylpentane | mol | - | - | - | 7.5 | - | - |
| 1,3-propanediol | mol | - | - | - | - | - | 15 |
| Cyclohexanedimethanol | mol | - | - | - | - | - | - |
| 3,9-bis(2-hydroxy-1,1-dimethylethyl)-2,4,8,10-tetraoxaspiro(5,5)undecane | mol | - | - | - | - | - | - |
| 1,6-hexanediol | mol | - | - | - | - | - | - |
| Diphenyl carbonate first stage | mol | 50 | 50 | 50 | 50 | 50 | 50 |
| Diphenyl carbonate second stage | mol | 1.5 | 3.0 | 1.5 | 1.5 | 1.5 | 1.5 |
| Specific viscosity | None | 0.35 | 0.32 | 0.34 | 0.28 | 0.25 | 0.27 |
| Tg | °C | 160 | 157 | 124 | 135 | 147 | 125 |
| OH value | % | 636 | 588 | 983 | 1050 | 870 | 971 |
| Biogenic matter content | % | 84 | 82 | 62 | 65 | 50 | 62 |
| Molecular weight retention (after 11 hours) | % | 97 | 97 | 98 | 96 | 96 | 90 |
| Molecular weight retention (after 15 days) | % | 97 | 97 | 98 | 96 | 96 | 90 |
| Saturation water absorption coefficient | % | 4.7 | 4.3 | 1.8 | 3.0 | 2.2 | 1.8 |
| Dimensional change rate | % | 1.1 | 0.9 | 0.3 | 0.7 | 0.5 | 0.3 |

Ex.: Example

Table 5 (continued)

| | Unit | Ex. 19 | Ex. 20 | Ex. 21 | C.Ex. 6 | C.Ex. 7 |
|---|---|---|---|---|---|---|
| Isosorbide | mol | 40 | 45 | 40 | 50 | 50 |
| 2,2-bis(4-hydroxyphenyl)propane | mol | - | - | - | - | - |
| 1,1-bis(4-hydroxyphenyl)decane | mol | - | - | - | - | - |
| 2,2-bis(4-hydroxyphenyl)-4-methylpentane | mol | - | - | - | - | - |
| 1,3-propanediol | mol | - | - | - | - | - |
| Cyclohexanedimethanol | mol | 10 | - | - | - | - |
| 3,9-bis(2-hydroxy-1,1-dimethylethyl)-2,4,8,10-tetraoxaspiro(5,5)undecane | mol | - | 5 | - | - | - |
| 1,6-hexanediol | mol | - | - | 10 | - | - |
| Diphenyl carbonate first stage | mol | 50 | 50 | 50 | 50 | 53 |
| Diphenyl carbonate second stage | mol | 1.5 | 1.5 | 1.5 | - | - |
| Specific viscosity | None | 0.27 | 0.29 | 0.28 | 0.34 | 0.12 |
| Tg | °C | 121 | 155 | 114 | 161 | 138 |
| OH value | | 351 | 416 | 324 | 3100 | 2000 |
| Biogenic matter content | % | 68 | 69 | 71 | 84 | 82 |
| Molecular weight retention (after 11 hours) | % | 94 | 96 | 95 | 78 | unmeasurable |
| Molecular weight retention (after 15 days) | % | 94 | 96 | 95 | 78 | unmeasurable |
| Saturation water absorption coefficient | % | 2.6 | 2.0 | 1.5 | 5.2 | unmeasurable |
| Dimensional change rate | % | 0.2 | 0.3 | 0.2 | 1.6 | unmeasurable |

Ex.: Example C.Ex.: Comparative Example

Effect of the Invention

The polycarbonate resin prepared according to the present invention contains a unit derived from biogenic matter in the main chain and has a high biogenic matter content. Although the polycarbonate resin prepared according to the present invention contains an ether diol component having high polarity, it has high moisture absorption resistance and is therefore excellent in the dimensional stability and wet heat stability of a molded article. The polycarbonate resin prepared according to the present invention is also excellent in heat resistance and heat stability. The polycarbonate resin prepared according to the present invention has low melt viscosity though it has a high biogenic matter content and is therefore excellent in moldability. The polycarbonate resin prepared according to the present invention has such high surface energy that it is hardly stained and has excellent abrasion resistance.

According to the production process of the present invention, there can be obtained a polycarbonate resin which contains a moiety derived from biogenic matter, is excellent in moisture absorption resistance, heat resistance, heat stability and moldability and has high surface energy.

The optical film prepared from this polycarbonate resin has a low photoelastic constant, high phase difference developability and phase difference controllability and excellent view angle characteristics as well as high heat resistance and heat stability.

Industrial Feasibility

The polycarbonate resin prepared according to the present invention is used for various purposes, for example, optical parts such as optical sheets, optical disks, information disks, optical lenses and prisms, mechanical parts, construction materials, auto parts, electric and electronic parts, OA equipment parts, resin trays and tableware.

## Claims

1. A process for producing a polycarbonate resin which contains 30 to 100 mol% of a unit represented by the following formula (1) in all the main chains and has

    (i) a biogenic matter content measured in accordance with ASTM D6866 05 of 25 to 100 %,
    (ii) a specific viscosity at 20°C of a solution prepared by dissolving 0.7 g of the resin in 100 ml of methylene chloride of 0.2 to 0.6 and
    (iii) an OH value of 2.5 x $10^3$ or less,

    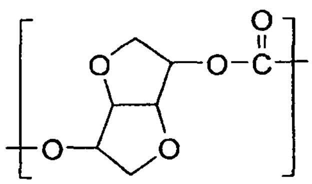

    (1)

    by reacting a dihydroxy component consisting of 30 to 100 mol% of an ether diol (component A) represented by the following formula (5) and 0 to 70 mol% of a diol or a diphenol (component B) except for the ether diol (component A) with a diester carbonate component (component C) by heating at normal pressure and then melt polycondensing the reaction product under reduced pressure by heating at 180 to 280°C in the presence of a polymerization catalyst, wherein
    (iv) the weight ratio of the component C to the dihydroxy component (component C/(component A + component B)) is set to 1.05 to 0.97 at the start of polymerization; and
    (v) the component C is further added to ensure that the weight ratio of the component C to the dihydroxy component (component C/(component A + component B)) during polymerization becomes 1.08 to 1.00.

    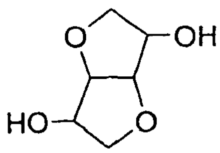

    (5)

2. The production process according to claim 1, wherein the unit of the formula (1) is a unit derived from isosorbide (1,4:3,6-dianhydro-D-sorbitol).

3. The production process according to claim 1, wherein the polycarbonate resin has a water absorption coefficient at 23°C after 24 hours of 0.75 % or less.

4. The production process according to claim 1, wherein the polycarbonate resin has a molecular weight retention at 120°C and 100 %RH after 11 hours of 80 % or more.

5. The production process according to claim 1, wherein diphenyl carbonate is used as the diester carbonate component (component C).

**Patentansprüche**

1. Verfahren zur Herstellung eines Polycarbonatharzes, welches in allen Hauptketten 30 bis 100 Mol% einer Einheit enthält, dargestellt durch die folgende Formel (1), und

(i) einen Gehalt an biogenem Material von 25 bis 100%, bestimmt gemäß ASTM D6866 05,
(ii) eine spezifische Viskosität bei 20°C einer Lösung, die hergestellt wird durch Auflösen von 0,7 g des Harzes in 100 ml Methylenchlorid, von 0,2 bis 0,6, und
(iii) einen OH-Wert von 2,5 x $10^3$ oder weniger aufweist

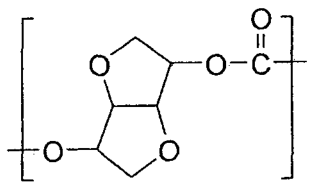

(1)

durch Umsetzen einer Dihydroxykomponente, bestehend aus 30 bis 100 Mol% eines Etherdiols (Komponente A), dargestellt durch die folgende Formel (5), und 0 bis 70 Mol% eines Diols oder eines Diphenols (Komponente B), mit Ausnahme des Etherdiols (Komponente A), mit einer Diestercarbonatkomponente (Komponente C) durch Erhitzen bei Normaldruck und anschließender Schmelzpolykondensation des Reaktionsprodukts unter verringertem Druck durch Erhitzen auf 180 bis 280°C in Gegenwart eines Polymerisationskatalysators, wobei
(iv) das Gewichtsverhältnis der Komponente C zu der Dihydroxykomponente (Komponente C/(Komponente A + Komponente B)) eingestellt wird auf 1,05 bis 0,97 am Beginn der Polymerisation; und
(v) die Komponente C wird weiter zugegeben, um sicherzustellen, dass das Gewichtsverhältnis der Komponente C zu der Dihydroxykomponente (Komponente C/(Komponente A + Komponente B)) während der Polymerisation 1,08 bis 1,00 erreicht.

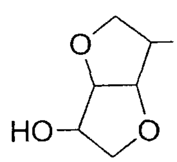

(5)

2. Herstellungsverfahren gemäß Anspruch 1, wobei die Einheit der Formel (1) eine Einheit ist, die abgeleitet ist von Isosorbid (1,4:3,6-Dianhydro-D-sorbit).

3. Herstellungsverfahren gemäß Anspruch 1, wobei das Polycarbonatharz einen Wasserabsorptionskoeffizienten bei 23°C nach 24 Stunden von 0,75% oder weniger aufweist.

4. Herstellungsverfahren gemäß Anspruch 1, wobei das Polycarbonatharz eine Molekulargewichtsretention bei 120°C und 100% RF nach 11 Stunden von 80% oder mehr aufweist.

5. Herstellungsverfahren gemäß Anspruch 1, wobei Diphenylcarbonat als die Diestercarbonatkomponente (Komponente C) verwendet wird.

## Revendications

1. Procédé de production d'une résine de polycarbonate qui contient 30 à 100 % en mole d'un motif représenté par la formule (1) suivante dans toutes les chaînes principales et a

   (i) une teneur en matière biogène mesurée conformément à la norme ASTM D6866 05 de 25 à 100 %,
   (ii) une viscosité spécifique à 20 °C d'une solution préparée en dissolvant 0,7 g de la résine dans 100 ml de chlorure de méthylène de 0,2 à 0,6 et
   (iii) un indice d'OH de 2,5 x $10^3$ ou moins,

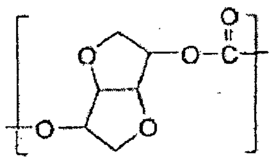

(1)

   en faisant réagir un composant dihydroxy consistant en 30 à 100 % en mole d'un éther diol (composant A) représenté par la formule (5) suivante et 0 à 70 % en mole d'un diol ou d'un diphénol (composant B) sauf pour l'éther diol (composant A) avec un composant diester carbonate (composant C) par chauffage à une pression normale puis polycondensation à l'état fondu du produit de réaction sous pression réduite par chauffage à 180 à 280 °C en présence d'un catalyseur de polymérisation, dans lequel
   (iv) le rapport en poids entre le composant C et le composant dihydroxy (composant C / (composant A + composant B)) est établi à 1,05 à 0,97 au démarrage de la polymérisation ; et
   (v) le composant C est en outre ajouté pour garantir que le rapport en poids entre le composant C et le composant dihydroxy (composant C / (composant A + composant B) ) pendant la polymérisation devienne de 1,08 à 1,00.

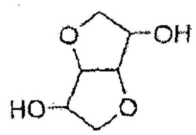

(5)

2. Procédé de production selon la revendication 1, dans lequel le motif de la formule (1) est un motif dérivé d'isosorbide (1,4:3,6-dianhydro-D-sorbitol).

3. Procédé de production selon la revendication 1, dans lequel la résine polycarbonate a un coefficient d'absorption d'eau à 23 °C après 24 heures de 0,75 % ou moins.

4. Procédé de production selon la revendication 1, dans lequel la résine polycarbonate a une rétention de masse moléculaire à 120 °C et 100 % de HR après 11 heures de 80 % ou plus.

5. Procédé de production selon la revendication 1, dans lequel le carbonate de diphényle est utilisé comme composant de diester carbonate (composant C).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 56055425 A
- JP 56110723 A
- JP 2003292603 A
- WO 2004111106 A
- JP 2006232897 A